Europäisches Patentamt

(19) European Patent Office

Office européen des brevets

(11) Publication number: **0 254 366 B1**

(12) **EUROPEAN PATENT SPECIFICATION**

(45) Date of publication of the patent specification: 05.09.90

(21) Application number: **87201362.8**

(22) Date of filing: **16.07.87**

(51) Int. Cl.⁵: **B29C 45/16**

(54) Process and device for injection moulding an object consisting of a number of layers of different materials.

(30) Priority: **21.07.86 NL 8601883**

(43) Date of publication of application:
**27.01.88 Bulletin 88/4**

(45) Publication of the grant of the patent:
**05.09.90 Bulletin 90/36**

(84) Designated Contracting States:
**AT BE CH DE ES FR GB GR IT LI LU NL SE**

(56) References cited:
**WO-A-82/01160**
**DE-A- 2 411 808**
**FR-A- 1 367 935**
**FR-A- 2 204 499**
**US-A- 4 029 841**

(73) Proprietor: **STAMICARBON B.V., Mijnweg 1, NL-6167 AC Geleen(NL)**

(72) Inventor: **Kersemakers, Jozef Johannes Franciscus Maria, Hillenraedtstraat 31, NL-6136 BR Sittard(NL)**
Inventor: **Meijer, Henricus Eduard Hubertus, P. Muellenersplein 4, NL-6125 CJ Born(NL)**
Inventor: **Martens, Gerardus, Kuiperstraat 5, NL-6171 EW Stein (L.)(NL)**

## Description

The invention relates to a process of injection moulding an object consisting of a number of layers of different materials, in which the different materials are successively and/or coaxially injected, in plasticated form, into a mould with the help of separate injection units and by means of a distributor.

More in particular, the invention relates to injection moulding multilayer thin-walled objects, that is, objects with a wall-thickness which is small with respect to that object's principal dimensions. The total wall-thickness of a large number of the objects referred to is 0.5–3.0 mm.

Such a process is known from GB-A 1 475 898. In the known process different materials are injected into the mould successively from different injection units, which means that, in the injection phase of the mould, the injection units must be opened and closed by means of valves.

In the case of thin-walled objects, the mould must therefore be filled within a very short time, that is, within about one second, dependent on the dimensions of the object, because the relatively cold walls of the mould cause the thin, plastic layer(s) of material to solidify rather quickly. If the material solidifies or hardens too soon (locally), the mould is not filled completely, resulting in a faulty product, which is undesirable.

The aim is therefore to inject the different materials in as short a time as possible, and to provide the possibility of creating more different products with one equipment.

However, moving valves have a certain inertia and thus set limits to a further reduction of the injection time.

The invention provides a process of the above kind which does not present the above disadvantage.

This process is, according to the invention, characterized in that, before being injected into the mould, the different materials are axially brought into a cylinder in the desired order and amounts, with the help of said separate injection units and by means of said distributor which is capable of creating one of a certain number of combinations and configurations of materials in the cylinder, upon which the contents of the cylinder are injected into the mould via said distributor.

By applying the process according to the invention, a significant reduction in mound filling time is achieved, because the mould is filled from a single injection unit.

The time available for filling the cylinder also includes the cooling time (per cycle) and is therefore essentially longer than the filling or injection time available in the known process. This enables practically any desired layer composition to be realized.

The smaller amount of time required for filling the mould is also an advantage from an economic point of view.

The cylinder can be filled by various extruders during the plasticating phase. In this embodiment relatively simple and, consequently, cheap equipment will suffice, notably: a number of plasticating units and only one injection unit for filling the mould. However, the materials are preferably injected into the cylinder after the plasticating phase. This presents the advantage that the layers can be composed with greater accuracy and that the composition is not affected by the plasticating process.

In DE-A 2 411 808 there is described a process of injection moulding an object consisting of a number of layers of different materials, in which two materials are successively injected in plasticated form in the mold. In this known process the two layers are fed successively into the extruding screw from different feed hoppers by actuating feed valves in the right sequence. Plasticizing, feeding and injection takes place in one and the same extruding screw. This results in an inaccurate separation between the two layers, but also between the charges for two successive injections, in which latter case especially there may arise irregularities on the surface of the product. Moreover this system does not enable a coaxial charge.

In FR-A 2 204 499 there is disclosed a comparable process, wherein the plastic charge is built up before one of two extruding screws, which in a first phase are in open connection to each other, whereupon in a second phase the one extruding screw is connected to the mold. This known process is also restricted in the configuration of the charges which can be built up in the one extruding screw.

The invention also relates to a device for carrying out the process according to claim 1, comprising a mould, a number of separate plastic injection units and a distributor.

The device known from the already-mentioned GB-A 1 475 898 comprises a number of independent plasticating-injection units and a number of bodies that can be moved to and fro in chambers, enabling selective connection of the mould to the plasticating units or the injection unit.

The disadvantage of the known device is that the bodies cannot be moved to and fro at an unlimited speed, to keep the injection time as short as possible, because this results in imperfections in the composition (arrangement and amount) of the various material flows. In addition, the known device is technically very complex when three or more (different) materials are to be injection moulded. This disadvantage also applies if a multi-step velocity profile is desired.

The aim of the invention is therefore also to provide a device of the above kind which obviates the above disadvantages at least to an important extent, and by which also the aim of the invention specified above is attained.

This device is, according to the invention, characterized in that the device comprises a cylinder provided with a movable piston and that the distributor consists of a number of elementary modules, each module being provided with at least one channel connecting at least one plasticating unit to said cylinder, in that a moving device is present to sequentially position the different modules in open connection with the cylinder, and in that one module is provided connecting said cylinder with said mould.

By employing this device it is possible to fill the mould in a shorter amount of time than has so far been possible. Moreover the device can be made suitable for manufacturing a product with other properties, like layer thickness, number of layers, position of a layer in the product, etc. in a relatively simple way, namely by replacing a module.

One embodiment of the device according to the invention is characterized in that each module consists of a disc-shaped element provided with radially extending borings, which elements are grouped to form an elongated body.

The process and device according to the invention are further elucidated in the following with reference to a number of example and drawings.

In the drawing,

figure 1 is a schematic representation, viewed from above, of an injection moulding machine substantially comprising a mould, a feed channel, a distributor and three plasticating units and an injection unit;

figure 2 is a side-view of the movable elongated body, consisting of elements, of the distributor;

figure 3 is a cross section along line 3–3 in figure 2;

figures 4.1 and 4.2 show the layer composition in the antechamber and in the mould, respectively, for a product consisting of 3 layers;

figures 5.1 and 5.2 show the layer composition in the antechamber and in the mould, respectively, for a product consisting of 5 layers;

figures 6.1 and 6.2 show the layer composition in the antechamber and in the mould, respectively, for a product consisting of 9 layers;

figures 7.1 and 7.2 show the layer composition in the antechamber and in the mould, respectively, for a product consisting of 3 layers with an eccentric core layer (on the injection side);

figures 8.1 and 8.2 show the layer composition in the antechamber and in the mould, respectively, for a product consisting of 3 layers with an eccentric core layer (on the sealing side);

figures 9.1 and 9.2 show the layer composition in the antechamber and in the mould, respectively, for a product consisting of 3 layers with an eccentric core layer (on the sealing side), with an improved layer thickness distribution;

figures 10.1 and 10.2 show the layer composition in the antechamber and in the mould, respectively, for a product consisting of 5 layers with an eccentric core layer.

figures 11.1 through 11.6 show the discs used in the distributor.

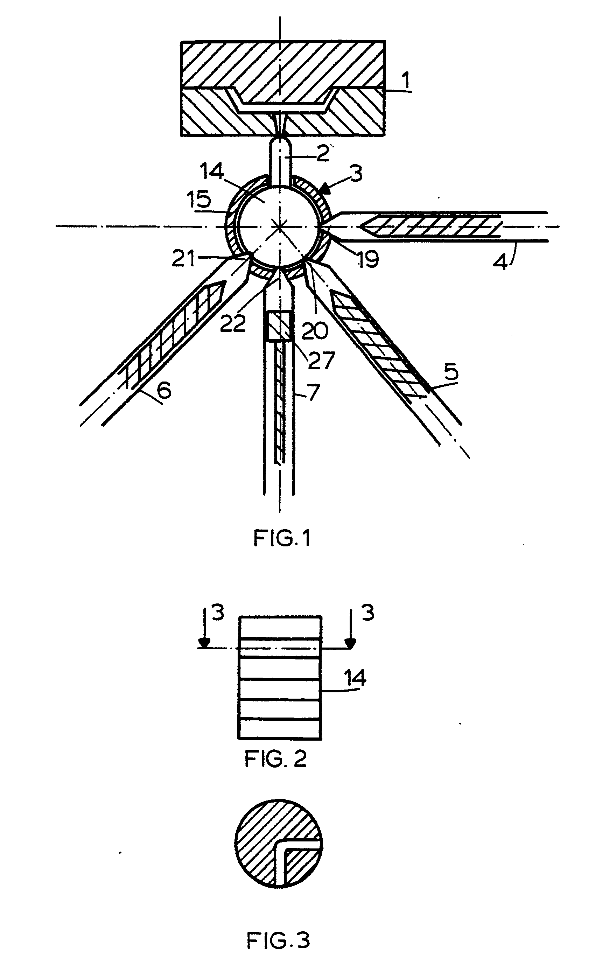

Figure 1 shows a schematic representation of an injection moulding machine, comprising a mould 1, a feed channel 2, a distributor 3, a first plasticating unit 4, a second plasticating unit 5, a third plasticating unit 6 and an antechamber with an injection unit 7. Instead of the illustrated plunger 27, a screw or a plasticating unit (not shown) may be used, to prevent a long residence time of (residual) material in injection unit 7.

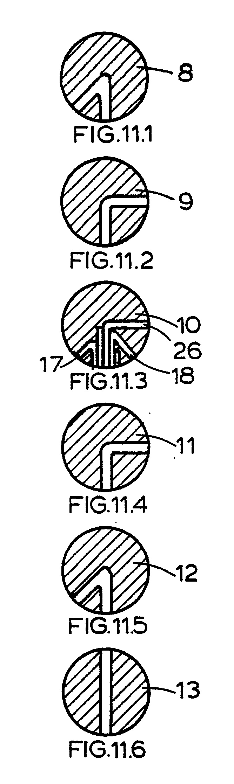

The plasticating units 4, 5 and 6 can be connected, either separately or combined, to antechamber/injection unit 7. Distributor 3 comprises an elongated body 14 (also see fig. 2) consisting of a number of discs 8 through 13 (see firgures 11.1 through 11.6), which shape can be moved to and fro by means of moving devices (not illustrated). Each disc 8 through 13 is provided with its own particular boring. Figure 11.3, for example, shows a disc 10 with three borings 17, 18 and 26, which are concentric along part of their length. The outlets 19, 20, 21 and 22 of plasticating units 4, 5 and 6 and antechamber/injection unit 7, respectively, all lie approximately in the same transverse plane of distributor 3.

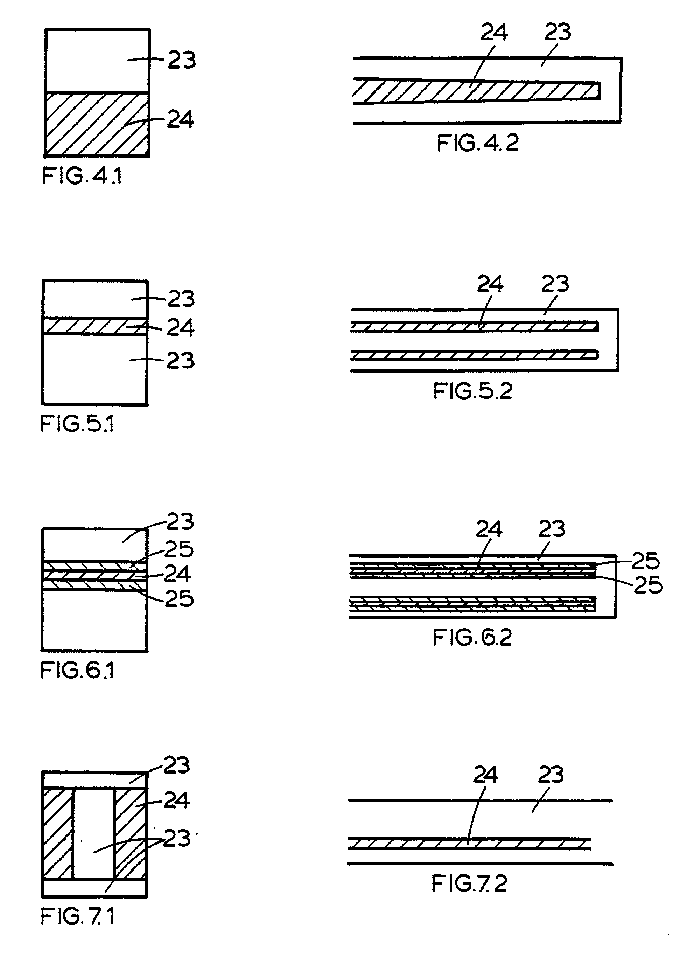

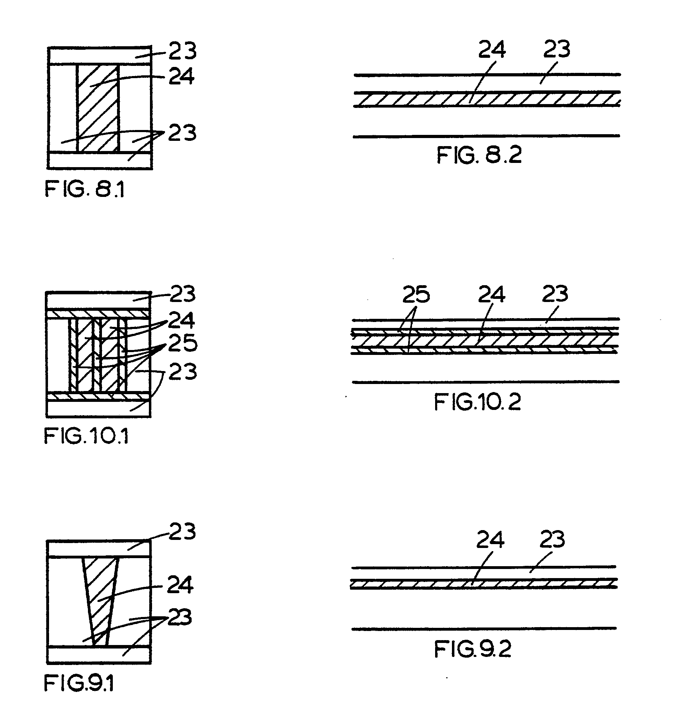

Figures 4 through 10 show a number of possible combinations of materials that may be used and their arrangement in the antechamber (this is not intended to be a limitative enumeration). In the figures layer 23 consist of, for example, polypropylene, commercially available under, for instance, the trade name "Stam P56M10", layer 24 consists of, for example, ethylene vinylalcohol (eval), commercially available under, for. instance, the trade name "Eval EPG", and layer 25 consists of a material that improves the adhesion between polypropylene and eval, for instance, the product available under the trade name "Admer QF 540".

Figures 4.1, 5.1, 6.1, 7.1, 8.1, 9.1 and 10.1 may be regarded as longitudinal sections of the contents of the antechamber.

With the help of the discs positioned specially for that purpose in the plane of outlets 19 through 21, the various materials are successively introduced into the antechamber/injection unit 7 via plasticating units 4, 5 and 6. With the help of disc 13 the contents of the antechamber are finally injected into mould 1 via feed channel 2.

Discs 8 through 13 are preferably dimensioned such that the volume occupied in them by the material to be injection moulded is small with respect to the volume of the mould.

One embodiment of the device according to the invention comprises an antechamber which is positioned between the feed channel and the distributor (not illustrated). This presents the advantage that the volume of the residual material remaining after injection from the antechamber into the mould is minimal.

## Claims

1. Process of injection moulding an object consisting of a number of layers of different materials, in which process the different materials are successively and/or coaxially injected, in plasticated form, into a mould (1) with the help of separate injection units (4, 5, 6) and by means of a distributor (3), characterized in that, before being injected into the mould, the different materials are axially brought into a cylinder (7) in the desired order and amounts, with the help of said separate injection units (4, 5, 6) and by means of a said distributor (3) which is capable of creating one of a certain number of combinations and configurations of materials in the cylinder (7), upon which the contents of the cylinder (7) are injected into the mould (1) via said distributor (3).

2. Device for carrying out the process according to claim 1, comprising a mould (1), a number of separate plastic injection units (4, 5, 6) and a distributor (3), characterized in that the device comprises a cylinder (7) provided with a movable piston (27) and that the distributor (3) consists of a number of elementary modules (14), each module being provided with at least one channel (17, 18, 20) connecting at least one plasticating unit (4, 5, 6) to said cylinder (7), in that a moving device is present to sequentially position the different modules (14) in open connection with the cylinder (7), and in that one module is provided connecting said cylinder with said mould.

3. Device according to claim 2, characterized in that each module (14) consists of a disc-shaped element provided with radially extending borings (17, 18, 20), which elements are grouped to form an elongated body.

4. Device according to claim 2 or 3, characterized in that one module (13) is provided with a channel connecting the cylinder (7) to the mould (1).

**Patentansprüche**

1. Verfahren zum Spritzgießen eines aus einer Zahl von Schichten aus verschiedenen Stoffen bestehenden Gegenstands, bei welchem Verfahren die verschiedenen Stoffe nacheinander und/oder koaxial mit Hilfe separater Einspritzeinheiten (4, 5, 6) und mittels eines Verteilers (3) in plastifiziertem Zustand in eine Form (1) eingespritzt werden, dadurch gekennzeichnet, daß die verschiedenen Stoffe, bevor sie in die Form eingespritzt werden, axial in einen Zylinder (7) in der gewünschten Reihenfolge und Menge mit Hilfe der separaten Einspritzeinheiten (4, 5, 6) und mittels des Verteilers (3), der fähig ist, eine aus einer bestimmten Anzahl von Kombinationen und Ausgestaltungen des Stoffes im Zylinder (7) zu schaffen, eingebracht werden, wonach der Inhalt des Zylinders (7) in die Form (1) über den Verteiler (3) eingespritzt wird.

2. Vorrichtung zur Durchführung des Verfahrens nach Anspruch 1, umfassend eine Form (1), eine Anzahl separater Kunststoffeinspritzeinheiten (4, 5, 6) und einen Verteiler (3), dadurch gekennzeichnet, daß die Vorrichtung einen mit einem bewegbaren Kolben (27) versehenen Zylinder (7) umfaßt und daß der Verteiler (3) aus einer Anzahl von elementarn Modulen (14) besteht, wobei jedes Modul mit zumindest einem Kanal (17, 18, 20) versehen ist, der zumindest eine Plastifizierungseinheit (4, 5, 6) mit dem Zylinder (7) verbindet, daß eine bewegliche Vorrichtung vorhanden ist, um nacheinander die verschiedenen Module (14) in offene Verbindung mit dem Zylinder (7) zu positionieren, und daß ein Modul vorgesehen ist, das den Zylinder mit der Form verbindet.

3. Vorrichtung nach Anspruch 2, dadurch gekennzeichnet, daß jedes Modul (14) aus einem scheibenförmigen Element besteht, das mit sich radial erstreckenden Bohrungen (17, 18, 20) versehen ist, wobei die Elemente so gruppiert sind, daß sie einen länglichen Körper bilden.

4. Vorrichtung nach Anspruch 2 oder 3, dadurch gekennzeichnet, daß ein Modul (13) mit einem Kanal versehen ist, der den Zylinder (7) mit der Form (1) verbindet.

**Revendications**

1. Procédé de moulage par injection d'un objet constitué d'un certain nombre de couches de matériaux différents, procédé dans lequel les différents matériaux sont, successivement et/ou coaxialement, injectés, sous forme plastifiée, dans un moule (1), à l'aide d'unités d'injection distinctes (4, 5, 6) et au moyen d'un distributeur (3), caractérisé en ce qu'avant d'être injectés dans le moule, différents matériaux sont amenés axialement dans un cylindre (7) dans l'ordre désiré et dans les proportions désirées, à l'aide desdites unités d'injection distinctes (4, 5, 6) et au moyen dudit distributeur (3) qui est capable de réaliser l'une d'un certain nombre de combinaisons et de configurations de matériaux dans le cylindre (7), après quoi les contenus du cylindre (7) sont injectés dans le moule (1) par l'intermédiaire dudit distributeur (3).

2. Dispositif pour mettre en œuvre le procédé conforme à la revendication 1, comportant un moule (1), un certain nombre d'unités distinctes (4, 5, 6) d'injection du plastique et un distributeur (3), caractérisé en ce que le dispositif comporte un cylindre (7) équipé d'un piston mobile (27) et en ce que le distributeur (3) est constitué d'un certain nombre de modules élémentaires (14), chaque module présentant au moins un canal (17, 18, 20) reliant au moins une unité de plastification (4, 5, 6) audit cylindre (7), en ce qu'il existe un dispositif de mouvement pour positionner séquentiellement les différents modules (14) en liaison ouverte avec le signal (7), et en ce qu'il est prévu un module reliant ledit cylindre avec ledit moule.

3. Dispositif selon la revendication 2, caractérisé en ce que chaque module (14) est constitué d'un élément en forme de disque présentant des perçages (17, 18, 20) s'étendant radialement, ces éléments étant groupés pour former un corps de forme allongée.

4. Dispositif selon la revendication 2 ou 3, caractérisé en ce qu'il est prévu un module (13) présentant un canal reliant le cylindre (7) au moule (1).

EP 0 254 366 B1

FIG.1

FIG. 2

FIG.3

FIG.4.1

FIG.4.2

FIG.5.1

FIG.5.2

FIG.6.1

FIG.6.2

FIG.7.1

FIG.7.2

FIG. 8.1

FIG. 8.2

FIG.10.1

FIG.10.2

FIG.9.1

FIG.9.2

FIG.11.1

FIG.11.2

FIG.11.3

FIG.11.4

FIG.11.5

FIG.11.6